Europäisches Patentamt

European Patent Office

Office européen des brevets

(19)

(11) EP 0 588 892 B1

(12) FASCICULE DE BREVET EUROPEEN

(45) Date de publication et mention
de la délivrance du brevet:
**21.02.1996 Bulletin 1996/08**

(21) Numéro de dépôt: **92912357.8**

(22) Date de dépôt: **09.06.1992**

(51) Int Cl.⁶: **G01N 21/35**

(86) Numéro de dépôt international:
**PCT/FR92/00530**

(87) Numéro de publication internationale:
**WO 92/22803 (23.12.1992 Gazette 1992/32)**

(54) **PROCEDE ET APPAREIL DE DOSAGE SPECTROPHOTOMETRIQUE DES LIQUIDES AQUEUX**

VORRICHTUNG ZUM SPEKTRALPHOTOMETRISCHEN DOSIEREN VON WÄSSERIGEN
FLÜSSIGKEITEN

METHOD AND APPARATUS FOR THE SPECTROPHOTOMETRIC ASSAY OF AQUEOUS
LIQUIDS

(84) Etats contractants désignés:
**AT BE CH DE DK ES FR GB GR IT LI LU MC NL
SE**

(30) Priorité: **10.06.1991 FR 9107116**

(43) Date de publication de la demande:
**30.03.1994 Bulletin 1994/13**

(73) Titulaire: **ANADIS INSTRUMENTS SA
F-30100 Ales (FR)**

(72) Inventeurs:
• **ASSELAIN, Marc
F-34980 Saint-Gély (FR)**
• **MANIFACIER, Daniel
F-30500 Saint-Ambroix (FR)**
• **AGNET, Yves
F-30129 Manduel (FR)**

(74) Mandataire: **Ravina, Bernard
F-31000 Toulouse (FR)**

(56) Documents cités:
**EP-A- 0 404 207**

• **APPLIED SPECTROSCOPY vol. 42, no. 2, 1988,
pages 217 - 227; M.P. FULLER ET AL.:
'PARTIAL LEAST-SQUARES QUANTITATVE
ANALYSIS OF INFRARED SPECTROSCOPIC
DATA'**

## Description

La présente invention concerne un procédé et un appareil pour le dosage des liquides aqueux contenant des composants afin de déterminer leur concentration.

Le dosage est effectué par spectrophotométrie dans une plage infrarouge dont la longueur d'ondes est de 2 à 25 micromètres.

Le problème essentiel pour ce type de dosage est que l'absorption par l'eau des rayonnements infrarouges dans la plage de bandes indiquée (2 à 25 micromètres) est importante.

Si on considère que l'intensité d'un faisceau de rayonnements transmise à travers une cellule remplie d'eau est (Io) et que celle à travers une cellule remplie de liquide aqueux à doser est (I), l'absorbance des composants est Log Io/I.

Pour obtenir des mesures exploitables, il faut que la différence entre le signal correspondant aux rayonnements transmis par une cellule remplie de liquide à doser et celui correspondant aux rayonnements transmis par la même cellule remplie d'eau soit importante par rapport aux bruits confondus avec les mesures prélevées.

Ceci nécessite l'ajustement de l'intensité des rayonnements incidents pour chaque longueur d'ondes ou plus précisément pour chaque bande du spectre correspondant à une fonction (liaison) à inspecter des composants en question. L'ajustement de chaque bande est nécessaire car, pour un faisceau polychromatique, l'énergie correspondante à chaque longueur d'ondes n'est pas égale, cet ajustement permet donc de laisser passer, à travers la cellule, une quantité d'énergie pour laquelle le rapport signal/bruit, pour le détecteur utilisé, est maximal.

L'ajustement de l'intensité de chaque bande permet d'utiliser un seul détecteur pour toutes les bandes, l'une après l'autre tout en travaillant dans une zone du capteur où le rapport signal/bruit est élevé.

A l'heure actuelle, l'analyse quantitative par spectrophotométrie, dans un milieu aqueux, est effectuée à l'aide de faisceaux monochromatiques dont l'intensité est ajustée.

Le mot monochromatique, ici, veut dire une bande de fréquences dont la largeur est étroite. Ceci est réalisable à l'aide d'une source polychromatique coopérant avec plusieurs filtres optiques, chacun sélectionne et ajuste (atténue plus ou moins) l'intensité d'une bande de fréquences, de telle sorte, que l'énergie transmise pour chaque bande correspond à la zone du capteur dans laquelle le rapport signal/bruit est suffisamment grand, autrement dit, de telle sorte, que les signaux mesurés soient exploitables.

Les systèmes d'analyses quantitatives spectrophotométriques dans un milieu aqueux sont donc des systèmes dispersifs, plusieurs faisceaux monochromatiques sont utilisés, chacun est obtenu à partir de même source polychromatique et un filtre adéquat.

Les inconvénients de ces systèmes sont :

- le nombre de bandes à inspecter correspond à un nombre égal ou inférieur à celui des filtres, pour avoir un spectre couvrant toute la plage de bandes, il faut un nombre très élevé de filtres.
- la lenteur, car pour chaque bande (chaque filtre), il faut effectuer les mesures nécessaires. De plus, entre deux mesures successives, il faut attendre que la stabilité mécanique et optique du système soit atteinte, autrement dit, il faut attendre que les vibrations mécaniques générées par le mouvement de changement de filtre soient amorties.

En effet, pour que ces systèmes dispersifs aient une cadence acceptable, il faut limiter le nombre de bandes à inspecter, ce nombre est, à l'heure actuelle, de 1 à 4 bandes pour chaque échantillon.

Le nombre d'échantillons à analyser pour les systèmes les plus rapides est de l'ordre de 300 échantillons/heure.

Les systèmes d'analyses spectrophotométriques non-dispersifs, c'est-à-dire, les systèmes interférométriques sont utilisés, à l'heure actuelle, soit pour des analyses qualitatives soit pour des analyses quantitatives approximatives pour des échantillons où les fréquences d'absorption des composants sont éloignées de celles d'absorption de la matrice du liquide. La matrice peut être un solvant ou, d'une manière générale, le liquide dans lequel ces dits composants sont contenus.

Ces systèmes ne sont pas utilisables à l'heure actuelle pour des analyses quantitatives, notamment, dans le cas où les composants à quantifier et la matrice absorbent les mêmes rayonnements ou des rayonnements très voisins.

L'avantage de ces systèmes est la rapidité, car l'interférogramme concernant toute la gamme de fréquences est obtenu en une seule série de mesures.

Cet interférogramme permet, à l'aide d'un autre interférogramme correspondant à la matrice, de déterminer le spectre d'absorbance pour toutes les longueurs d'ondes de la gamme de fréquences.

L'inconvénient majeur de ces systèmes est que l'analyse quantitative n'est pas possible dans un milieu liquide où la matrice et les composants à détecter absorbent des rayonnements de même fréquence, ceci est le cas type du lait pour le dosage de matière grasse, protéines et lactose.

En effet, l'analyse spectrophotométrique par interférométrie est réputée impossible pour le dosage des composants du lait.

Contrairement à cette idée reçue, nos recherches ont démontré que le dosage des composants du lait, à titre d'exemple, est possible par interférométrie avec une incertitude inférieure à 0,6 g/kg pour chaque composant et avec une répétabilité dont la fluctuation est inférieure à 0,18 g/kg pour chaque composant, ceci à condition de respecter certains paramètres physiques bien déterminés pendant les mesures.

Le but de la présente invention est donc de proposer un procédé et un appareil d'analyses quantitatives par interférométrie dans un milieu aqueux pour un spectre dont la longueur d'ondes va de 2 à 25 micromètres.

Un autre but de l'invention est de proposer un appareil de dosage dont la cadence peut atteindre 800 échantillons/heure, ceci quelque soit le nombre de composants à doser.

Encore un autre but de la présente invention est de pouvoir obtenir un spectre complet d'absorption pour la totalité des composants, ceci est très intéressant pour plusieurs raisons comme, par exemple :

- pouvoir prendre en considération toutes les bandes du spectre concernant un composant donné, ceci soit pour une même liaison afin de parfaire le résultat à obtenir en introduisant le maximum de coefficients de corrélation concernant la liaison concernée soit pour deux liaisons différentes ou plus concernant le même composant,

- pouvoir explorer à volonté le spectre d'absorbance pour le dosage d'autres composants existant dans l'échantillon, ceci peut conduire à des analyses plus complètes.

Les sytèmes d'analyses spectrophotométriques dispersifs, à l'heure actuelle, imposent l'exploration d'un nombre limité de bandes de fréquences prédéterminées, ceci limite forcément d'un côté le nombre de composants à doser et d'un autre côté la recherche de l'influence de tous les composants sur le comportement d'absorption pour un composant donné dans une bande donnée.

A cet effet, le procédé faisant partie de la présente invention pour le dosage spectrophotométrique des liquides aqueux contenant des composant $X_1$, $X_2$,..., $X_n$,..., afin de déterminer leur concentration $C_1$, $C_2$,..., $C_n$,..., pour un spectre infrarouge dont la longueur d'ondes est de 2 à 25 micromètres, se caractérise essentiellement en ce qu'il comporte les étapes suivantes :

1/ Prélever, au moins, un interférogramme d'eau pour l'ensemble des longueurs d'ondes prédésignées, ceci à travers une épaisseur d'eau de 10 à 20 micromètres, ce prélèvement étant à effectuer en respectant les conditions suivantes :

    a- température : 35 à 50°C,
    b- fluctuation maximale en température : 0,2°C,
    c- hygrométrie relative maximale : 1%.

2/ Calculer, à partir de l'interférogramme d'eau, le spectre $(So(f))$ correspondant à l'intensité $(Io)$ traversant la dite épaisseur d'eau en fonction de la fréquence $(f)$, $(So)$ étant les valeurs mesurées.

3/ Prélever, au moins, un interférogramme du dit liquide, pour la même épaisseur et dans les mêmes conditions de l'étape 1.

4/ Calculer le spectre $(S(f))$, correspondant à l'intensité $(I)$ traversant l'épaisseur du liquide en fonction de la fréquence $(f)$.

5/ Déterminer à partir de $(So(f))$ et $(S(f))$ l'absorbance $(A(f))$ $A(f) = \text{Log} (So/S) = \text{Log} (Io/I)$.

6/ Déterminer à partir de l'absorbance $(A(f))$ et à l'aide des analyses de références choisies, la concentration de chacun des composants concernés.

Suivant une autre caractéristique du procédé, la concentration $(Cn)$ de chaque composant $(Xn)$ est déterminée en prenant en considération plusieurs absorbances $A(f_1)$, $A(f_2)$,..., $A(f_r)$ selon une relation d'étalonnage du type :

$$Cn = a_{n1}\ A(f_1) + a_{n2}\ A(f_2) + ..., a_{nr}A(fr) + a_{nk}$$

où $A(f_1)$, $A(f_2)$,..., $A(f_r)$ sont des valeurs d'absorbance déterminées pour le dit liquide à des fréquences $f_1$, $f_2$,..., $f_r$ et, $a_{n1}$, $a_{n2}$,..., $a_{nr}$, $a_{nK}$ sont des coefficients de corrélation déterminés par régression linéaire multiple à partir des échantillons de références à concentrations connues et des mesures interférométriques effectuées sur ces mêmes échantillons et correspondant aux mêmes fréquences $f_1$, $f_2$,..., $f_r$.

Suivant encore une autre caractéristique du procédé, le prélèvement de chaque interférogramme est effectué à :

EP 0 588 892 B1

- une température de 38 à 42°C et dont la fluctuation maximale est 0,1°C,
- une hygrométrie relative maximale de 0,2%.

Suivant une deuxième disposition, l'appareil de dosage du liquide faisant partie de la présente invention se caractérise essentiellement en ce qu'il comporte :

- un interféromètre produisant un faisceau polychromatique interféré par déphasages successifs réalisés autour d'un déphasage nul,
- une enceinte de mesures renfermant :

    a - un moyen pour la détection de la température émettant un signal significatif transmis à une unité de calcul et de commande (U.C.C.),

    b- un moyen de chauffe commandé par l'U.C.C afin de maintenir la température à l'interieur de l'enceinte à une valeur comprise entre 35 et 50°C avec une fluctuation maximale de 0,2°C,

    c- un moyen pour limiter l'humidité relative à une valeur maximale de 1%,

    d- une cellule d'une forme aplatie d'un espacement interne de 10 à 20 micromètres à remplir par le liquide à doser,

    e- un détecteur photosensible recevant le faisceau interféré issu de la cellule après l'avoir traversée et émettant des signaux conséquents pour chaque déphasage,

- une unité de calcul et de commande recevant, entre autres, les signaux du détecteur photosensible en fonction des déphasages et calculant :

    - un spectre (S(f)) correspondant à l'intensité (I) transmise en fonction de la fréquence (f),
    - l'absorbance $A(f) = Log (S°/S = Log I°/I$ où $S°(f)$ est un spectre d'eau correspondant à l'intensité transmise ($I°$) en fonction de la fréquence (f),
    - les concentrations $C_1$, $C_2$,...,$C_n$,..., à partir de l'absorbance et à l'aide des analyses de références choisies.

Suivant une autre caractéristique, l'appareil se caractérise par trois étapes de régulation de la température :

- une première étape constituée par une première sonde thermique, située à proximité de la pompe, pour détecter la température ($T_{1'}$) du liquide à introduire dans l'enceinte de mesures émettant vers l'U.C.C. un signal significatif de la dite température et un premier moyen de chauffe commandé par la dite U.C.C. pour maintenir la température du liquide destiné à l'analyse à une température ($T_1$),
- une deuxième étape constituée par une deuxième sonde thermique, située dans l'enceinte de mesures, pour mesurer sa température ambiante ($T_{2'}$) émettant vers l'U.C.C. un signal thermique de la dite température et un deuxième moyen de chauffe commandé par l'U.C.C. pour maintenir la température de la dite ambiance à une température ($T_2$) où $T_2$-$T_1$ = $^+$0,5°C,
- une troisième étape constituée par une troisième sonde thermique, solidaire de la cellule, pour mesurer sa température ($T_{3'}$) et émettant vers l'U.C.C. un signal significatif de la dite température et un troisième moyen de chauffe commandé par l'U.C.C. pour maintenir la dite température de la cellule à ($T_3$) où $T_3$-$T_2$ =$^+$0,5°C,

Les deux dernières étapes de régulation constituant le moyen de détection thermique et le moyen de chauffe pour réguler la température de l'enceinte.

L'invention sera mieux comprise à la lecture de la description détaillée donnée ci-après et accompagnée par des dessins dans lesquels :

- la figure 1 est un schéma décrivant le circuit du liquide dans l'appareil,
- la figure 2 est une vue schématique en coupe de l'enceinte de mesures posée sur l'interféromètre,
- la figure 3 est une vue schématique de face de l'appareil pour montrer la séparation mécanique entre ces deux parties,

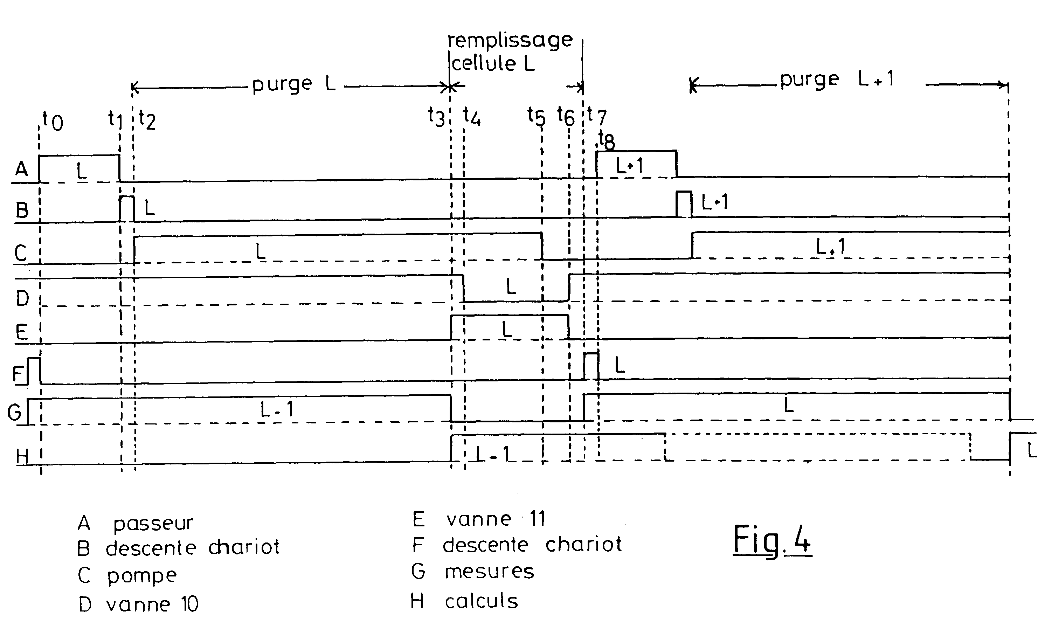

- la figure 4 est un chronogramme.

Le procédé consiste essentiellement d'abord à prélever des interférogrammes dans des conditions précises de

4

point de vue thermique et hygrométrique afin de minimiser les fluctuations de mesures dûes à ces deux paramètres puis à exploiter le maximum d'informations contenues dans ces mesures pour que les concentrations calculées soient les plus proches possible de la réalité.

Les conditions de mesures sont :

- une température entre 35 et 50°C et, de préférence, entre 37 et 45°C, avec une fluctuation maximale de 0,2°C et de préférence de 0,1°C,
- une humidité relative maximale de 1% et, de préférence, de 0,2%.

Un dosage de routine, a comme but, de déterminer rapidement et avec un degré de précision acceptable des composants identifiés pour une série d'échantillons de liquide.

Ce dosage consiste à prélever un interférogramme pour un liquide comportant des composants $X_1$, $X_2$,..., $X_n$,..., puis calculer l'absorbance du liquide par rapport à la matrice constituant le fond du liquide puis se référer à des équations d'étalonnage concernant chaque composant pour prédire les concentrations $C_1$, $C_2$,..., $C_n$,...,.

L'établissement des équations d'étalonnage pour des composants $X_1$, $X_2$,...,$X_n$,..., consiste à :

- effectuer des analyses de références sur une série d'échantillons de liquides, comportant les composants $X_1$, $X_2$,..., $X_n$,..., à des concentrations variables.
- établir pour chacun des dits liquides une courbe d'absorbance en fonction de la fréquence A(f),
- considérer la concentration de chaque constituant comme :

$$C_n = a_{n1}A(f_1)+a_{n2}A(f_2)+...+a_{nr}A(f_r)+A_{nk}$$

où $A(f_1)$, $A(f_2)$,..., $A(f_r)$, sont des absorbances du liquide à des fréquences $f_1, f_2,...,f_r$,

- calculer par régression linéaire multiple à partir des concentrations trouvées par les analyses de références pour les échantillons de liquides et les absorbances déterminées pour les mêmes liquides les constantes de corrélation $a_{n1}$, $a_{n2}$,..., $a_{nr}$, $a_{nk}$, pour chaque composant.

En ce qui suit, on donne un exemple pour l'établissement des équations d'étalonnage de la matière grasse (M.G.) de la matière protéique (M.P.) dans le lait :

**1/ ANALYSE DE REFERENCE** :

TABLEAU (1)

| ECH. | M.G. mg/kg | M.P. mg/kg |
|------|-----------|-----------|
| 1 | 24.1 | 24.1 |
| 2 | 24.7 | 31.9 |
| 3 | 24.3 | 39.5 |
| 4 | 39.0 | 24.5 |
| 5 | 39.0 | 31.9 |

**2/ ABSORBANCE A(f)**

TABLEAU (2)

| Ech | $f_1$ | $f_2$ | $f_3$ | $f_4$ |
|-----|-------|-------|-------|-------|
| 1 | 0,1596 | 0,1477 | 0,4023 | 0,1668 |
| 2 | 0,1604 | 0,2053 | 0,3936 | 0,1701 |
| 3 | 0,1563 | 0,2629 | 0,3935 | 0,1693 |
| 4 | 0,2664 | 0,1441 | 0,3890 | 0,2458 |
| 5 | 0,2668 | 0,2004 | 0,3846 | 0,2481 |

$f_1 = 1745\ \text{cm}^{-1}$,
$f_2 = 1548\ \text{cm}^{-1}$,
$f_3 = 1040\ \text{cm}^{-1}$,
$f_4 = 2873\ \text{cm}^{-1}$.

## 3/ EQUATIONS D'ETALONNAGE CALCULEES

$$C(M.G.) = 74{,}4900\ A(f_1) + 2{,}0620\ A(f_2) + 4{,}3699\ A(f_3) + 88{,}3947\ A(f_4) + (-\,4{,}6602) \tag{1}$$

$$C(M.P.) = 27{,}4633\ A(f_1) + 136{,}1743\ A(f_2) + 13{,}5142\ A(f_3) + (-24{,}3837)\ A(f_4) + (-\,1{,}8142) \tag{2}$$

4/ Comparaison des concentrations de références (C.réf) (tableau 1) avec les concentrations calculées (C.cal) de la matière grasse (M.G.) et de la matière protéique (M.P) à partir de l'absorbance (tableau 2) et de l'équation d'étalonnage de chaque composant (équations 1 et 2 respectivement).

TABLEAU (3)

| Ech | M.G. | | M.P. | |
|-----|------|------|------|------|
| | C.rèf | C.cal | C.rèf | C.cal |
| 1 | 24,1 | 24,0 | 24,1 | 24,1 |
| 2 | 24,7 | 24,5 | 31,9 | 31,7 |
| 3 | 24,3 | 24,2 | 39,5 | 39,5 |
| 4 | 39,0 | 38,9 | 24,5 | 24,4 |
| 5 | 39,0 | 39,2 | 31,9 | 31,9 |

Cet exemple simplifié est donné à titre indicatif, le dosage peut être effectué pour d'autres liquides contenant plus de composants et la détermination de l'équation d'étalonnage pour chaque composant peut être basée sur l'absorbance à un nombre de fréquences plus élevé.

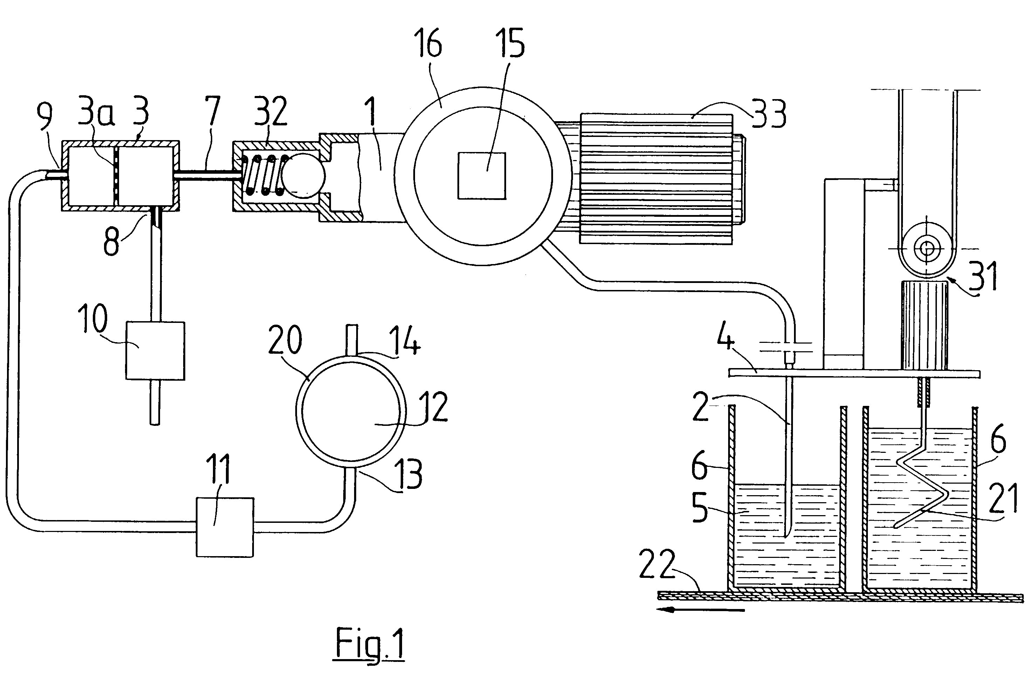

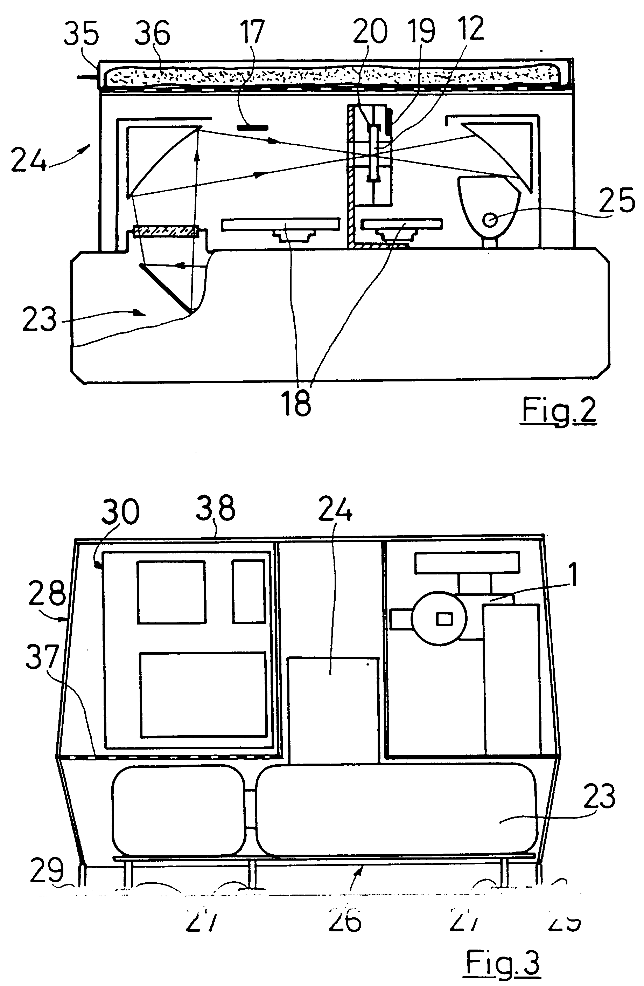

Sur les figures 1 et 2, les organes essentiels de l'appareil sont schématiquement illustrés.

Un passeur 22 comme, par exemple, une bande sans fin porte les échantillons de liquide à doser, chaque liquide 5 est contenu dans un récipient 6, le passeur coopère avec un détecteur de présence non-présenté.

Le rôle de ce détecteur est de délivrer un signal indiquant la présence du récipient au regard d'une pipette 2, ce signal est utilisé pour la commande de l'arrêt de la bande.

La pipette 2 et un agitateur 21 sont portés par un chariot 4 verticalement mobile à l'aide d'un organe moteur 31 muni de moyens de transmission.

Le chariot est mobile entre deux positions ; une position haute et une position basse.

La présence d'agitateur est nécessaire dans le cas où le liquide à doser comporte des composants ayant tendance à se séparer soit par flottation soit par précipitation du reste du liquide, ceci est le cas de la matière grasse dans le lait, une agitation est donc nécessaire afin que le liquide dosé soit représentatif.

Dans le cas où le chariot porte un agitateur, l'espacement pipette-agitateur sera identique à l'espacement entre deux récipients successifs, ceci permet l'agitation d'un récipient pendant l'aspiration du liquide contenu dans le récipient précédent.

Une pompe 1 aspire le liquide du récipient. Cette pompe est une pompe à membrane dont la partie mécanique est dotée d'un radiateur de refroidissement 33.

La pompe utilisée est une pompe à 4 temps/seconde et produisant au refoulement une pression approximative de 190-200 bars, la partie de la pompe contenant le liquide est équipée d'un moyen de chauffe comme, par exemple, une ceinture chauffante 16 et d'une sonde thermique 15.

La sortie de la pompe est accordée à un homogénéïseur 32 classique à billes d'une résistance approximative de 180 bars. La pression résiduelle à la sortie de l'homogénéïseur est d'environ 10-15 bars.

L'homogénéïseur a, comme rôle, de diviser certains composants pour atteindre une taille d'un micromètre environ et d'éviter, par conséquent, le phénomène de diffraction optique du faisceau (longueur d'ondes 2-25 micromètres).

A la sortie de la pompe, le liquide est acheminé dans un filtre 3 ayant une entrée 7 et deux sorties 8 et 9 : la sortie 8 est contrôlée par une vanne 10 normalement ouverte et conduisant vers un récipient de récupération ou vers une canalisation d'évacuation non-présentés, la sortie 9 est contrôlée par une vanne 11 et conduisant vers une cellule 12.

La cellule 12 a une forme aplatie et un espacement interne de 10 à 20 micromètres et, de préférence, de 15 à 18 micromètres, la cellule a une entrée 13 se trouvant à son niveau le plus bas et une sortie 14 se trouvant à son niveau le plus haut, la sortie de la cellule conduit à un récipient de récupération ou à une canalisation d'évacuation non présentés.

Cette cellule se trouve dans une enceinte de mesures 24 associée à un interféromètre 23.

L'interféromètre produit un faisceau polychromatique interféré par déphasages successifs pris autour d'une position de déphasage nul.

Les composantes monochromatiques du dit faisceau polychromatique ont des longueurs d'ondes allant de 2 à 25 micromètres, c'est-à-dire, des fréquences de 400 à 5000 cm$^{-1}$.

La cellule est équipée d'un moyen de chauffe comme, par exemple, une ceinture chauffante 20 dont la commande est établie à partir d'un signal d'une sonde thermique 19 se trouvant solidaire de la cellule, ceci concerne la régulation de la température du liquide dans la cellule.

L'enceinte est équipée d'une sonde thermique 17 et d'un moyen de chauffe comme, par exemple, un bloc chauffant 18, ceci pour réguler la température ambiante et, par conséquent, du passage du faisceau, la sonde thermique 17 est située en amont de la cellule.

L'enceinte est équipée d'un moyen pour réduire l'humidité relative à une valeur maximale de 1% et de préférence de 0,2%. Ce moyen consiste en un tiroir (35) dans lequel un sac à parois perméables est rempli d'agent de dessication solide (silica-gel ou équivalent).

La paroi 37 entre le tiroir et l'enceinte est une paroi perméable.

Le faisceau polychromatique interféré traverse la cellule pour être détecté par un détecteur photosensible 25.

Le détecteur 25 émet des signaux (des tensions) correspondant à chaque déphasage.

L'appareil est équipé d'une unité de calcul et de commande 30 (U.C.C.) recevant, entre autres, les signaux émis par le détecteur 25 en fonction de chaque déphasage et calculant :

- par transformé de Fourrier (TF) rapide, un spectre (S(f)) correspondant à l'intensité (I) de lumière (faisceau polychromatique infrarouge) reçue, où (f) est la fréquence,
- l'absorbance A = Log (So/S) = Log (Io/I), ($I_o$) est l'intensité de lumière reçue pour une cellule remplie d'eau.

La régulation thermique de l'appareil est réalisée par trois étapes :

- une première étape constituée par une première sonde thermique, située à proximité de la pompe, pour détecter la température ($T_{1'}$) du liquide à introduire dans l'enceinte de mesures émettant vers l'U.C.C. un signal significatif de la dite température et un premier moyen de chauffe commandé par la dite U.C.C. pour maintenir la température du liquide destiné à l'analyse à une température ($T_1$),
- une deuxième étape constituée par une deuxième sonde thermique, située dans l'enceinte de mesures, pour mesurer sa température ambiante ($T_{2'}$) émettant vers l'U.C.C. un signal thermique de la dite température et un deuxième moyen de chauffe commandé par l'U.C.C. pour maintenir la température de la dite ambiance à une température ($T_2$) où $T_2 - T_1 = {}^+0,5°C$,
- une troisième étape constituée par une troisième sonde thermique, solidaire de la cellule, pour mesurer sa température ($T_{3'}$) et émettant vers l'U.C.C. un signal significatif de la dite température et un troisième moyen de chauffe commandé par l'U.C.C. pour maintenir la dite température de la cellule à ($T_3$) où $T_3 - T_2 = {}^+0,5°C$,

Les deux dernières étapes de régulation constituant le moyen de détection thermique et le moyen de chauffe pour réguler la température de l'enceinte.

Le premier moyen de chauffe peut être constitué par un collier chauffant 16 coopérant via l'U.C.C. avec la première sonde thermique 15 située sur la partie de la pompe comportant le liquide à introduire dans l'enceinte de mesures.

Le deuxième moyen de chauffe peut être constitué par un bloc chauffant 18 se trouvant sur le fond de l'enceinte coopérant avec une sonde thermique 17 se trouvant dans l'atmosphère de l'enceinte et, de préférence, en aval de la cellule.

Le troisième moyen de chauffe peut être constitué par une ceinture chauffante 3 entourant le contour de la cellule coopérant avec une sonde thermique 19.

Il est à noter que les sondes thermiques 15, 17 et 19 doivent être capables de mesurer la température avec une incertitude de 0,1 °C.

Des sondes remplissant ces conditions de précision sont disponibles sur le marché.

Il est également à noter que les moyens de chauffe peuvent prendre d'autres formes connues.

Il est encore à noter que les étapes de régulation thermique peuvent avoir un nombre supérieur à trois.

La commande pour l'U.C.C. des mouvements du passeur 22, du chariot 4 de la pompe 1, des vannes 10 et 11 est organisée selon un cycle s'étalant entre un instant $(t_1)$ et un instant $(t_8)$, le déroulement du dit cycle étant marqué par des instants $(t_1)$, $(t_2)$,..., $(t_8)$, la durée $t_2$-$t_3$ étant une phase de purge pendant laquelle le circuit entre la pipette et la vanne 10 étant nettoyé et la durée $t_3$-$t_7$ est une phase de remplissage de la cellule :

- à l'instant $(t°)$, le chariot (4) étant en position haute, le passeur avance pour placer un récipient, contenant un liquide donné (L) faisant partie d'une série de liquide à doser,..., L-1, L, L+1,..., au regard de la dite pipette, il s'arrête à un instant $(t_1)$,
- le chariot effectue une descente à l'instant $(t_1)$ pour s'arrêter en position basse à l'instant $(t_2)$,
- à l'instant $(t_2)$ la pompe 1 se met en marche, la vanne 10 étant ouverte et la vanne 11 étant fermée, pendant la phase de purge $t_2$-$t_3$, le liquide nettoie le circuit entre la pipette et la vanne 10,
- à l'instant $(t_3)$ la vanne 11 s'ouvre, la vanne 10 étant toujours ouverte, pendant une période $t_3$-$t_4$, le liquide en provenance du récipient traverse les deux vannes 10 et 11,
- à l'instant $(t_4)$, la vanne 10 se ferme, la vanne 11 étant toujours ouverte, pendant une période $t_4$-$t_6$, le liquide est autorisé à passer uniquement par la vanne 11,
- à l'instant $(t_5)$, la pompe s'arrête,
- à l'instant $(t_6)$ la vanne 10 s'ouvre et la vanne 11 se ferme de nouveau,
- à l'instant $(t_7)$, le chariot monte pour s'arrêter en position haute à un instant $(t_8)$, instant à lequel le passeur commence un nouveau cycle,
- à l'instant $(t_7)$ et jusqu'à la fin de la purge du liquide suivant (L+1), les mesures étant effectuées sur le liquide (L), ces mesures sur le liquide (L) étant suivies par les calculs concernant le même liquide à partir de la phase de remplissage concernant le liquide (L+1), ces calculs pouvant s'étaler jusqu'à la fin de la phase de purge concernant le liquide (L+2).

Pour éviter les vibrations mécaniques dans l'enceinte de mesures, l'appareil est réalisé en deux parties mécaniquement séparées :

- une premi''interféromètre 23 et l'enceinte de mesures 24, cette première partie étant équipée des pieds 27 amortissant les vibrations, et,
- une deuxième partie 28 enjambant la dite première partie, cette deuxième partie étant également équipée par des pieds 29 amortissant les vibrations, des liaisons hydriques et électriques étant réalisées entre ces deux parties à l'aide de liens souples.

La pompe est fixée sur la deuxième partie à l'aide de moyens absorbant les vibrations.

L'appareil est muni de moyens de ventilation situés au niveau de sa paroi supérieure 38 (non-présentés).

L'unité de calcul et de commande 30 est contenu dans un compartiment dont la paroi inférieure 37 est perméable, ceci pour permettre la circulation d'air forcé par la ventilation.

**Revendications**

1. Procédé de dosage spectrophotométrique des liquides aqueux contenant des composants $X_1$, $X_2$,..., $X_n$,... afin de déterminer leur concentration $C_1$, $C_2$,...,$C_n$,..., pour un spectre infrarouge dont la longueur d'ondes est de 2 à 25 micromètres (fréquences de 400 à 5000 $cm^{-1}$) caractérisé en ce qu'il comporte les étapes suivantes :

    1/ prélever, au moins, un interférogramme d'eau pour l'ensemble des longueurs d'ondes prédésignées, ceci à travers une épaisseur d'eau de 10 à 20 micromètres, ce prélèvement étant à effectuer en respectant les conditions suivantes :

    a- température : 35 à 50°C,
    b- fluctuation maximale en température : 0,2°C,
    c- hygrométrie relative maximale : 1%,

    2/ calculer, à partir de l'interférogramme d'eau, le spectre (So(f)) correspondant à l'intensité (Io) traversant la dite épaisseur d'eau en fonction de la fréquence (f), (So) étant les valeurs mesurées,

    3/ prélever, au moins, un interférogramme du dit liquide, pour a même épaisseur et dans les mêmes conditions de l'étape 1,

4/ calculer le spectre (S(f)), correspondant à l'intensité (I) traversant l'épaisseur du liquide en fonction de la fréquence (f),

5/ déterminer à partir de (So(f)) et (S(f)) l'absorbance (A(f))

$$A(f) = Log (So/S) = Log (Io/I).$$

6/ déterminer à partir de l'absorbance (A(f)) et des résultats des analyses de références choisies, la concentration de chacun des composants concernés.

2. Procédé selon la revendication 1 de dosage d'un liquide aqueux contenant des composants $X_1$, $X_2$,...,$X_n$,..., afin de déterminer leur concentration $C_1$, $C_2$,..., $C_n$,..., caractérisé en ce que la concentration $(C_n)$ de chaque composant $(X_n)$ est déterminée en prenant en considération plusieurs absorbances $A(f_1)$, $A(f_2)$,..., $A(f_r)$ selon une relation étalon du type :

$$Cn = a_{n1} A(f_1) + a_{n2} A(f_2) + ...,a_{nr}A(fr)+A_{nk}$$

où $A(f_1)$, $A(f_2)$,..., $A(f_r)$ sont des valeurs d'absorbance déterminées pour le dit liquide à des fréquences $f_1$, $f_2$,..., $f_r$ et, $a_{n1}$, $a_{n2}$,..., $a_{nr}$, $a_{nK}$ sont des constantes de corrélation déterminées par régression linéaire multiple à partir des échantillons de références à concentrations connues et des mesures interférométriques effectuées sur ces mêmes échantillons et correspondant aux mêmes fréquences $f_1$, $f_2$,..., $f_r$.

3. Procédé selon la revendication 1 caractérisé en ce que le prélèvement de chaque interférogramme est effectué à :

-   une température de 38 à 42°C et dont la fluctuation maximale est 0,1°C,
-   une hygrométrie relative maximale de 0,2%.

4. Appareil de dosage de liquide aqueux contenant des composants $X_1$, $X_2$,..., $X_n$,... afin de déterminer leur concentration $C_1$, $C_2$,..., $C_n$,..., par absorption de rayonnements infrarouges d'une longueur d'ondes allant de 2 à 25 micromètres caractérisé en ce qu'il comporte :

-   un interféromètre (23) produisant un faisceau polychromatique interféré par déphasages successifs réalisés autour d'un déphasage nul,
-   une enceinte (24) de mesures renfermant :

    a - un moyen pour la détection de la température émettant un signal significatif transmis à une unité d'acquisition, de calcul et de commande (U.C.C.),

    b- un moyen de chauffe commandé par l'U.C.C. afin de maintenir la température à l'intérieur de l'enceinte à une valeur comprise entre 35 et 50°C avec une fluctuation maximale de 0,2°C,

    c- un moyen pour limiter l'humidité relative à une valeur maximale de 1%,

    d- une cellule (12) d'une forme aplatie d'un espacement interne de 10 à 20 micromètres à remplir par le liquide à doser,

    e- un détecteur photosensible (25) recevant le faisceau interféré issu de la cellule après l'avoir traversée et émettant des signaux conséquents pour chaque déphasage,

-   une unité de calcul et de commande recevant, entre autres, les signaux du détecteur photosensible en fonction des déphasages et calculant :
-   un spectre (S(f)) correspondant à l'intensité (I) transmise en fonction de la fréquence (f),
-   l'absorbance $A(f) = Log (S°/S = Log I°/I$ où $S°(f)$ est un spectre d'eau correspondant à l'intensité transmise (I°) en fonction de la fréquence (f),
-   les concentrations $C_1$, $C_2$,...,$C_n$,..., à partir de l'absorbance et à l'aide des analyses de références choisies.

5. Appareil selon la revendication 4 caractérisé par :

-   une pompe (1) en aval d'une pipette (2) et en amont d'un filtre (3),
-   une pipette (2), en amont de la pompe, portée par un chariot verticalement mobile (4) pour aspirer le liquide (5) contenu dans un récipient (6),

- un filtre (3), en aval de la pompe, ayant une entrée (7) et deux sorties (8) et (9), la sortie (8) étant contrôlée par une vanne asservie normalement ouverte (10) et conduisant vers un récipient ou une canalisation d'évacuation et la sortie (9) étant contrôlée par une vanne asservie (11) normalement fermée et conduisant vers la cellule (12),
- une cellule d'une forme aplatie ayant une entrée (13) se trouvant à son niveau le plus bas et une sortie (14) se trouvant à son niveau le plus haut, la sortie conduisant vers un récipient ou une canalisation d'évacuation.

6. Appareil selon la revendication 4 et la revendication 5 caractérisé par trois étapes de régulation de la température :

- une première étape constituée par une première sonde thermique, située à proximité de la pompe, pour détecter la température ($T_{1'}$) du liquide à introduire dans l'enceinte de mesures émettant vers l'U.C.C. un signal significatif de la dite température et un premier moyen de chauffe commandé par la dite U.C.C. pour maintenir la température du liquide destiné à l'analyse à une température ($T_1$),
- une deuxième étape constituée par une deuxième sonde thermique, située dans l'enceinte de mesures, pour mesurer sa température ambiante ($T_{2'}$) émettant vers l'U.C.C. un signal thermique de la dite température et un deuxième moyen de chauffe commandé par l'U.C.C. pour maintenir la température de la dite ambiance à une température ($T_2$) où $T_2$-$T_1$ $=^+ 0,5°C$,
- une troisième étape constituée par une troisième sonde thermique, solidaire de la cellule, pour mesurer sa température ($T_{3'}$) et émettant vers l'U.C.C. un signal significatif de la dite température et un troisième moyen de chauffe commandé par l'U.C.C. pour maintenir la dite température de la cellule à ($T_3$) où $T_3$-$T_2$ $=^+0,5°C$,

Les deux dernières étapes de régulation constituant le moyen de détection thermique et le moyen de chauffe pour réguler la température de l'enceinte.

7. Appareil selon la revendication 6 caractérisé en ce que :

- la première sonde thermique (15) est située sur la pompe (1) et le premier moyen de chauffe est constitué par un collier chauffant (16) entourant la dite pompe,
- la deuxième sonde thermique (17) se trouve dans l'atmosphère de l'enceinte et le deuxième moyen de chauffe est constitué par un bloc chauffant (18) se trouvant sur le fond de l'enceinte et,
- la troisième sonde thermique (19) se trouve solidaire de la cellule (12) et le troisième moyen de chauffe est constitué par une ceinture chauffante (20) entourant le contour de la cellule (12).

8. Appareil selon l'une quelconque des revendications 4-6 caractérisé en ce qu'il comporte :

- un chariot (4) verticalement mobile entre deux positions : une position basse et une position haute, le dit chariot porte une pipette (2) et éventuellement un agitateur (21), le dit agitateur étant à l'arrêt dans la position haute et en fonctionnement dans la position basse,
- un passeur (22), comme par exemple, une bande sans fin pour porter des récipients (6) contenant des échantillons de liquide (5) à analyser, l'espacement entre deux récipients successifs est, dans le cas où le chariot est équipé d'un agitateur identique à l'espacement pipette-agitateur, de telle sorte que dans la position basse, la pipette se trouvant dans un récipient et l'agitateur se trouvant dans le récipient suivant.

9. Appareil selon la revendication 8 caractérisé en ce que la commande par l'U.C.C. des mouvements du passeur (22), du chariot (4) de la pompe (1), des vannes (10) et (11) est organisée selon un cycle s'étalant entre un instant ($t_1$) et un instant ($t_8$), le déroulement du dit cycle étant marqué par des instants ($t_1$), ($t_2$),..., ($t_8$), la durée $t_2$-$t_3$ étant une phase de purge pendant laquelle le circuit entre la pipette et la vanne (10) étant nettoyé et la durée $t_3$-$t_7$ est une phase de remplissage de la cellule :

- à l'instant ($t°$), le chariot (4) étant en position haute, le passeur avance pour placer un récipient, contenant un liquide donné (L) faisant partie d'une série de liquide à doser L-1, L, L+1,..., au regard de la dite pipette, il s'arrête à un instant ($t_1$),
- le chariot effectue une descente à l'instant ($t_1$) pour s'arrêter en position basse à l'instant ($t_2$),
- à l'instant ($t_2$) la pompe (1) se met en marche, la vanne (10) étant ouverte et la vanne (11) étant fermée, pendant la phase de purge $t_2$-$t_3$, le liquide nettoie le circuit entre la pipette et la vanne (10),
- à l'instant ($t_3$) la vanne (11) s'ouvre, la vanne (10) étant toujours ouverte, pendant une période $t_3$-$t_4$, le liquide en provenance du récipient traverse les deux vannes (10) et (11),
- à l'instant ($t_4$), la vanne (10) se ferme, la vanne (11) étant toujours ouverte, pendant une période $t_4$-$t_6$, le liquide

est autorisé à passer uniquement par la vanne (11),

- à l'instant ($t_5$), la pompe s'arrête,
- à l'instant ($t_6$) la vanne (10) s'ouvre et la vanne (11) se ferme de nouveau,
- à l'instant ($t_7$), le chariot monte pour s'arrêter en position haute à un instant ($t_8$), instant à lequel le passeur commence un nouveau cycle,
- à l'instant ($t_7$) et jusqu'à la fin de la purge du liquide suivant (L+1), les mesures étant effectuées sur le liquide (L), ces mesures sur le liquide (L) étant suivies par les calculs concernant le même liquide à partir de la phase de remplissage concernant le liquide (L+1), ces calculs pouvant s'étaler jusqu'à la fin de la phase de purge concernant le liquide (L+2).

**10.** Appareil selon l'ensemble des revendications 4-9 caractérisé en ce qu'il est constitué des deux parties mécaniquement séparées :

- une première partie (26) constituée par l'interféromètre (23) et l'enceinte de mesures (24), cette première partie étant équipée des pieds amortissant les vibrations, et,
- une deuxième partie (28) enjambant la dite première partie, cette deuxième partie étant également équipée par des pieds (29) amortissant les vibrations, des liaisons hydriques et électriques étant réalisées entre ces deux parties à l'aide de liens souples.

**11.** Appareil selon la revendication 10 caractérisé en ce que la pompe (1) est fixée sur la deuxième partie (28) à l'aide de moyens absorbant les vibrations.

## Patentansprüche

1. Verfahren zum spektralphotometrischen Analysieren von wäßrigen Flüssigkeiten, die Bestandteile $X_1$, $X_2$, ... , $X_n$,... enthalten, um deren Konzentrationen $C_1$, $C_2$,..., $C_n$, ... zu bestimmen, und zwar für ein Infrarot-Spektrum, dessen Wellenlängen von 2 bis 25 Mikrometern reichen (Frequenzen von 400 bis 5000 $cm^{-1}$), dadurch gekennzeichnet, daß das Verfahren die folgenden Schritte umfaßt:

   1/ Aufnehmen mindestens eines Wasser-Interferogramms für die Gesamtheit der vorbestimmten Wellenlängen, und zwar über eine Wasserdicke von 10 bis 20 Mikrometern, wobei diese Aufnahme unter Beachtung der folgenden Bedingungen zu erfolgen hat:

   - a- Temperatur: 35 bis 50 °C,
   - b- maximale Temperaturschwankung 0,2 °C,
   - c- maximale relative Luftfeuchtigkeit 1%,

   2/ Berechnen des Spektrums (So(f)), das der Intensität (Io) entspricht, die in Abhängigkeit von der Frequenz (f) die besagte Dicke des Wassers durchquert, wobei (So) die Meßwerte sind,
   3/ Aufnehmen wenigstens eines Interferogramms der besagten Flüssigkeit, und zwar für die selbe Dicke und unter denselben Bedingungen von Schritt 1,
   4/ Berechnen des Spektrums (S(f)), das der Intensität (I) entspricht, die in Abhängigkeit von der Frequenz (f) die Dicke der Flüssigkeit durchquert,
   5/ Bestimmen der Extinktion A(f), bzw. der dekadischen Extinktion bzw. des negativen dekadischen Logarithmus des Durchlaßgrades

   $$A(f) = Log(So/S) = Log(Io/I),$$

   und zwar ausgehend von (So(f)) und von (S(f)),
   6/ Bestimmen der Konzentration jedes betreffenden Bestandteils, und zwar ausgehend von der Extinktion (A(f)) und von den Ergebnissen der gewählten Referenzanalysen.

2. Verfahren zum spektralphotometrischen Analysieren einer wäßrigen Flüssigkeit gemäß Anspruch 1, die Bestandteile $X_1$, $X_2$, ... , $X_n$ , ... enthält, um ihre Konzentrationen $C_1$, $C_2$,..., $C_n$, ... zu bestimmen, dadurch gekennzeichnet, daß die Konzentration ($C_n$) jedes Bestandteils ($X_n$) bestimmt wird, indem mehrere Extinktionen $A(f_1)$, $A(f_2)$, ... $A(f_r)$ in Betracht gezogen werden, und zwar gemäß einer Bezugsfunktion des folgenden Typs:

   $$C_n = a_{n1} A(f_1) + a_{n2} A(f_2) + ..., a_{nr}A(f_r) + A_{nk}$$

   in der $A(f_1)$, $A(f_2)$,..., $A(f_r)$ Extinktionswerte sind, die für die besagte Flüssigkeit bei Frequenzen $f_1$, $f_2$,..., $f_r$ bestimmt

worden sind, und

in der $a_{n1}$, $a_{n2}$,..., $a_{nr}$, $a_{nk}$ Korrelationskonstanten sind, die durch mehrfache lineare Regression bestimmt wurden, und zwar ausgehend von Referenzmeßproben mit bekannten Konzentrationen und ausgehend von interferometrischen Messungen, die mit diesen selben Meßproben ausgeführt wurden und die denselben Frequenzen $f_1$, $f_2$,..., $f_r$ entsprechen.

3. Verfahren gemäß Anspruch 1, dadurch gekennzeichnet, daß die Aufnahme jedes Interferogramms

- bei einer Temperatur von 38 bis 42°C, deren maximale Schwankung 0,1°C beträgt, und
- bei einer maximalen relativen Luftfeuchtigkeit von 0,2% ausgeführt wird.

4. Vorrichtung zum Analysieren von wäßrigen Flüssigkeiten, die Bestandteile $X_1$, $X_2$, ..., $X_n$ ,... enthalten, um deren Konzentrationen $C_1$, $C_2$,..., $C_n$, ... zu bestimmen, und zwar durch Absorption von Infrarotstrahlen mit einer Wellenlänge, die von 2 bis 25 Mikrometern reicht, dadurch gekennzeichnet, daß sie die folgenden Merkmale aufweist:

- ein Interferometer (23), das ein polychromatisches Strahlenbündel erzeugt, das von aufeinanderfolgenden Phasen überlagert ist, die um eine Null-Phase herum verwirklicht sind,
- eine Meßbox (24), die die folgenden Merkmale aufweist:

  a - ein Abtastmittel zum Ermitteln der Temperatur, das ein kennzeichnendes Signal ausgibt, das an eine Erfassungs-, Berechnungs- und Steuerungseinheit (U.C.C.) übertragen wird,
  b - ein durch die U.C.C. gesteuertes Heizmittel, um die Temperatur im Inneren der Box bei einer Temperatur zwischen 35 und 50°C zu halten, und zwar mit einer maximalen Abweichung von 0,2°C,
  c - ein Begrenzungsmittel zum Begrenzen der relativen Luftfeuchtigkeit auf einen Maximalwert von 1%,
  d - eine Zelle (12) mit abgeflachter Form und mit einem innengelegenen Zwischenraum von 10 bis 20 Mikrometern, der durch die zu dosierende Flüssigkeit zu füllen ist,
  e - ein strahlungsempfindlicher Detektor (25), der das überlagerte Strahlenbündel empfängt, das aus der Zelle hervorgeht, nachdem es dieses durchquert hat, und der daraus folgende Signale für jede Phasenverschiebung abgibt,

- eine Berechnungs- und Steuerungseinheit, die unter anderem die Signale des strahlungsempfindlichen Detektors in Abhängigkeit von den Phasenverschiebungen empfängt und die die folgenden Daten berechnet:

  - ein Spektrum $(S(f))$, das der Intensität $(I)$ entspricht, die in Abhängigkeit von der Frequenz $(f)$ übertragen wurde,
  - die Extinktion $A(f) = Log (So/S) = Log (lo/l)$, wobei $So$ $(f)$ ein Wasser-Spektrum ist, das der durchgelassenen Intensität $(lo)$ in Abhängigkeit der Frequenz $(f)$ entspricht,
  - die Konzentrationen $C_1$, $C_2$,..., $C_n$,..., und zwar ausgehend von der Extinktion und mit Hilfe der ausgewählten Referenzanalysen.

5. Vorrichtung gemäß Anspruch 4, die durch die folgenden Merkmale gekennzeichnet ist:

- eine Pumpe (1) stromabwärts von einer Pipette (2) und stromaufwärts von einem Filter (3),
- eine Pipette (2) stromaufwärts von der Pumpe, wobei die Pipette (2) von einem vertikal beweglichen Wagen (4) getragen wird und zum Ansaugen der in einem Behälter (6) enthaltenen Flüssigkeit (5) dient,
- einen Filter (3) stromabwärts von der Pumpe, der einen Eingang (7) und zwei Ausgänge (8) und (9) hat, wobei der Ausgang (8) durch ein normalerweise offenes angesteuertes Ventil (10) gesteuert wird und zu einem Abflußbehälter oder zu einem Abflußkanal führt und wobei der Ausgang (9) durch ein normalerweise geschlossenes angesteuertes Ventil (11) gesteuert wird und zu der Zelle (12) führt,
- eine Zelle mit abgeflachter Form, die einen Eingang (13), der sich auf ihrem niedrigsten Niveau befindet, und einen Ausgang (14) hat, der sich auf ihrem höchsten Niveau befindet, wobei der Ausgang zu einem Abflußbehälter oder zu einem Abflußkanal führt.

6. Vorrichtung gemäß Anspruch 4 und Anspruch 5, dadurch gekennzeichnet, daß sie drei Stufen der Temperaturregelung aufweist:

- eine erste Stufe, die durch eine erste thermische Sonde, die sich in der Nähe der Pumpe befindet, und zwar zum Ermitteln der Temperatur $(T_1)$ der in die Meßbox einzuführenden Flüssigkeit, und die ein kennzeichnendes Signal der besagten Temperatur zur U.C.C. abgibt, und weiter durch ein erstes Heizmittel gebildet wird, das durch besagte U.C.C. gesteuert wird, um die Temperatur der für die Analyse bestimmten Flüssigkeit bei einer Temperatur ($T_1$) zu halten,

- eine zweite Stufe, die durch eine zweite thermische Sonde, die sich in der Meßbox befindet, und zwar zum Messen ihrer Umgebungstemperatur ($T_{2'}$), und die ein thermisches Signal der besagten Temperatur zur U.C.C. abgibt, und weiter durch ein zweites Heizmittel gebildet wird, das durch die U.C.C. gesteuert wird, um die Temperatur der besagten Umgebung bei einer Temperatur (T2) zu halten, wobei $T_2$-$T_1$ = ± 0,5°C ist,

- eine dritte Stufe, die durch eine dritte thermische Sonde, die fest mit der Zelle verbunden ist, und zwar zum Messen ihrer Temperatur ($T_{3'}$), und die ein kennzeichnendes Signal der besagten Temperatur zur U.C.C. sendet, und weiter durch ein drittes Heizmittel gebildet wird, das durch die U.C.C. gesteuert wird, um die besagte Temperatur der Zelle bei ($T_3$) zu halten, wobei $T_3$-$T_2$ = ±0,5°C ist,

wobei weiterhin die beiden letzten Stufen der Regelung das thermische Abtastmittel und das Heizmittel zum Einstellen der Temperatur der Box bilden.

7. Vorrichtung gemäß Anspruch 6, gekennzeichnet durch die folgenden Merkmale:

- die erste thermische Sonde (15) befindet sich an der Pumpe (1) und das erste Heizmittel wird von einem Heizring (16) gebildet, der die besagte Pumpe umgibt,

- die zweite thermische Sonde (17) befindet sich in der Atmosphäre der Box und das zweite Heizmittel wird durch einen Heizblock (18) gebildet, der sich am Boden der Box befindet, und

- die dritte thermische Sonde (19) ist fest mit der Zelle (12) verbunden und das dritte Heizmittel wird durch einen Heizgürtel (20) gebildet, der den Umriß der Zelle (12) umgibt.

8. Vorrichtung gemäß einem der Ansprüche 4 bis 6, dadurch gekennzeichnet, daß sie die folgenden Merkmale aufweist:

- einen Wagen (4), der vertikal zwischen zwei Positionen beweglich ist: eine untere und eine obere Position, wobei der Wagen eine Pipette (2) und eventuell einen Rührer (21) trägt, wobei der besagte Rührer in der oberen Position angehalten und in der unteren Position in Betrieb ist,

- einen Probenwechsler (22) wie beispielsweise ein endloses Band zum Tragen von Behältern (6), die Meßproben (5) der zu analysierenden Flüssigkeit enthalten, wobei der Zwischenraum zwischen zwei aufeinanderfolgenden Meßproben in dem Fall, in dem der Wagen mit einem Rührer ausgestattet ist, mit dem Zwischenraum zwischen Pipette und Rührer übereinstimmt, und zwar derart, daß sich in der unteren Position die Pipette in einem Behälter und der Rührer in dem folgenden Behälter befinden.

9. Vorrichtung gemäß Anspruch 8, dadurch gekennzeichnet, daß die Steuerung der Bewegungen des Probenwechslers (22), des Wagens (4), der Pumpe (1), der Ventile (10) und (11) durch die U.C.C. gemäß einem Zyklus organisiert ist, der sich zwischen einem Zeitpunkt ($t_1$) und einem Zeitpunkt ($t_8$) erstreckt, wobei der Ablauf des besagten Zyklus durch Zeitpunkte ($t_1$), ($t_2$), ..., ($t_8$) geprägt ist und wobei die Dauer $t_2$-$t_3$ eine Spülphase ist, während der der Kreis zwischen der Pipette und dem Ventil (10) gereinigt wird, und wobei die Dauer $t_3$-$t_7$ eine Phase des Füllens der Zelle ist:

- zum Zeitpunkt (to), in dem der Wagen (4) in der oberen Position ist, rückt der Probenwechsler vor, um einen Behälter, der eine gegebene Flüssigkeit (L) enthält, die Teil einer zu dosierenden Flüssigkeitsreihe ,..., L-1, L, L+1,..., ist, gegenüber der besagten Pipette zu plazieren, wobei er zu einem Zeitpunkt (t1) anhält,

- der Wagen führt zum Zeitpunkt ($t_1$) eine Abwärtsbewegung aus, um zum Zeitpunkt ($t_2$) in der unteren Position anzuhalten,

- zum Zeitpunkt ($t_2$) setzt sich die Pumpe (1) in Gang, wobei das Ventil (10) geöffnet und das Ventil (11) geschlossen ist und wobei während der Spülphase $t_2$-$t_3$ die Flüssigkeit den Kreis zwischen der Pipette und dem Ventil (10) reinigt,

- zum Zeitpunkt ($t_3$) öffnet das Ventil (11) für einen Zeitraum $t_3$-$t_4$, wobei das Ventil (10) immer noch geöffnet ist und wobei die vom Behälter stammende Flüssigkeit die beiden Ventile (10) und (11) durchströmt,

- zum Zeitpunkt ($t_4$) schließt das Ventil (10) während einer Dauer $t_4$-$t_6$, wobei das Ventil (11) immer noch geöffnet ist und wobei die Flüssigkeit nur durch das Ventil (11) strömen kann,

- zum Zeitpunkt ($t_5$) hält die Pumpe an,

- zum Zeitpunkt ($t_6$) öffnet das Ventil (10) und das Ventil (11) schließt von neuem,

- zum Zeitpunkt ($t_7$) hebt sich der Wagen, um zu einem Zeitpunkt ($t_8$) in der oberen Position anzuhalten, und zwar zu einem Zeitpunkt, zu dem der Probenwechsler einen neuen Zyklus beginnt,

- zum Zeitpunkt ($t_7$) und bis zum Ende des Spülens der folgenden Flüssigkeit (L + 1) werden die Messungen an der Flüssigkeit (L) ausgeführt, wobei diese Messungen an der Flüssigkeit (L) von den Berechnungen gefolgt werden, die dieselbe Flüssigkeit betreffen, und zwar ab der die Flüssigkeit (L + 1) betreffenden Füllungsphase, wobei sich diese Berechnungen bis zum Ende der die Flüssigkeit (L + 2) betreffenden Spülphase erstrecken können.

10. Vorrichtung gemäß den Ansprüchen 4 bis 9, dadurch gekennzeichnet, daß sie von mechanisch voneinander getrennten Teilen gebildet wird:

- von einem ersten Teil (26), der durch das Interferometer (23) und durch die Meßbox (24) gebildet wird, wobei dieser erste Teil mit schwingungsdämpfenden Füßen versehen ist, und
- von einem zweiten Teil (28), der den besagten ersten Teil überspannt, wobei dieser zweite Teil ebenso mit schwingungsdämpfenden Füßen (29) versehen ist und wobei weiterhin Flüssigkeitsverbindungen und elektrische Verbindungen zwischen diesen beiden Teilen hergestellt sind, und zwar mit Hilfe von biegsamen Verbindungsteilen.

11. Vorrichtung gemäß Anspruch 10, dadurch gekennzeichnet, daß die Pumpe (1) auf dem zweiten Teil (28) befestigt ist, und zwar mit Hilfe von schwingungsdämpfenden Mitteln.

## Claims

1. A method for spectrophotometric assay of aqueous liquids containing components $X_1$, $X_2$,...$X_n$,... in order to determine their concentrations $C_1$, $C_2$,...$C_n$,... for an infrared spectrum the wavelength of which is from 2 to 25 micrometres (frequencies from 400 to 5000 $cm^{-1}$) characterised in that it comprises the following stages:

   1) taking at least a water interferogram for the set of wavelengths designated above, through a depth of water of 10 to 20 micrometres, this interferogram to be taken whilst maintaining the following conditions:-

   a) temperature: 35 to 50°C,
   b) maximum temperature fluctuation: 0.2°C,
   c) maximum relative humidity: 1%,

   2) calculating, from the water interferogram, the spectrum (So(f)) corresponding to the intensity (Io) going through said depth of water as function of the frequency (f), (So) being the measured values,

   3) taking at least an interferogram of said liquid for the same depth and the same conditions as stage 1,

   4) calculating the spectrum (S(f)) corresponding to the intensity (I) going through the depth of the liquid as a function of the frequency (f),

   5) determining from (So(f)) and (S(f)) the absorbance
   (A(f)). A(f) = Log (So/S) = Log (Io/I),

   6) determining from the absorbance (A(f)) and the results of selected reference analyses the concentration of each of the components concerned.

2. A method according to claim 1 for spectrophotometric assay of an aqueous liquid containing components $X_1$, $X_2$,...$X_n$,..., in order to determine their concentrations $C_1$, $C_2$,...$C_n$,..., characterised in that the concentration ($C_n$) of each component ($X_n$) is determined by considering several absorbances $A(f_1)$, $A(f_2)$,...$A(f_r)$, according to a standard relation of the type:

$$C_n = a_{n1} A(f_1) + a_{n2} A(f_2)+..., a_{nr}A(fr) + A_{nk}$$

   where $A(f_1)$, $A(f_2)$,..., $A(f_r)$ are absorbance values determined for said liquid at frequencies $f_1$, $f_2$...$f_r$ and, $a_{n1}$, $a_{n2}$,..., $a_{nr}$, $a_{nk}$, are correlation constants determined by multiple linear regression from reference samples at known concentrations and interferometric measurements made on the same samples and corresponding to the same frequencies $f_1$, $f_2$,..., $f_r$.

3. A method according to claim 1 characterised in that each interferogram is taken at:

   - a temperature from 38 to 42°C and the maximum fluctuation of which is 0.1°C,

   - a maximum relative humidity of 0.2%.

4. An apparatus for assay of aqueous liquid containing components $X_1$, $X_2$,...$X_n$,..., in order to determine their concentrations $C_1$, $C_2$,...$C_n$,..., by absorption of infrared radiations of a wavelength going from 2 to 25 micrometres characterised in that it comprises:

   - an interferometer (23) producing a polychromatic beam interfered by successive phase shifts made around a zero phase shift,

   - a measurement casing (24) containing:

      a) a means for temperature detection emitting an indicating signal transmitted to an acquisition, calculation and control unit (C.C.U.),

      b) a heating means controlled by the C.C.U. in order to maintain the temperature inside the casing at a value comprised between 35 to 50°C with a maximum fluctuation of 0.2°C,

      c) a means for limiting the relative humidity to a maximum value of 1%,

      d) a cell (12) of a flat shape with an internal spacing of 10 to 20 micrometres to be filled with the liquid to be assayed,

      e) a photosensitive detector (25) receiving the interfered beam coming from the cell after having gone therethrough and emitting consequent signals for each phase shift,

   - a calculation and control unit receiving among others, the signals from the photosensitive detector as a function of the phase shifts and calculating:

   - a spectrum (S(f)) corresponding to the intensity (I) transmitted as a function of the frequency (f),

   - the absorbance $A(f) = Log (So/S) = Log Io/I$ where So(f) is a spectrum of water corresponding to the intensity (Io) as a function of the frequency (f),

   - the concentrations $C_1$, $C_2$,...$C_n$,..., from the absorbance and with the aid of selected reference analyses.

5. An apparatus according to claim 4 characterised by:

   - a pump (1) downstream of a pipette (2) and upstream of a filter (3)

   - a pipette (2), upstream of the pump, carried by a vertically moveable carriage (4) for suctioning the liquid (5) contained in a container (6),

   - a filter (3), downstream of the pump, having an inlet (7) and two outlets (8) and (9), the outlet (8) being controlled by a normally-open servocontrolled slide valve (10) and leading to a container or a discharge conduit and the outlet (9) being controlled by a normally-closed servocontrolled slide valve (11) and leading to the cell (12),

   - a cell of a flat shape having an inlet (13) located at its lowest level and an outlet (14) located at its highest level, the outlet leading to a container or a discharge conduit.

6. An apparatus according to claim 4 and claim 5 characterised by three temperature regulation stages:

   - a first stage constituted by a first thermal probe situated near the pump, for detecting the temperature ($T_1$) of the liquid to be introduced into the measuring casing, emitting a signal indicating said temperature to the C.C.U. and a first heating means controlled by said C.C.U. to maintain the temperature of the liquid intended for analysis

at a temperature $(T_1)$,

- a second stage constituted by a second thermal probe, situated in the measuring casing, for measuring its ambient temperature $(T_{2'})$ emitting a thermal signal indicating said temperature to the C.C.U. and a second heating means controlled by the C.C.U. to maintain said ambient temperature at a temperature $(T_2)$ where $T_2-T_1 = +0.5°C$,

- a third stage constituted by a third thermal probe, integral with the cell, for measuring its temperature $(T_{3'})$ and emitting a signal indicating said temperature to the C.C.U. and a third heating means controlled by the C.C.U. to maintain said temperature of the cell at $(T_3)$ where $T_3-T_2 = +0.5°C$,

- the last two temperature regulation stages consisting the means for temperature detection and the heating means for regulating the temperature of the casing.

7. An apparatus according to claim 6 characterised in that:

- The first thermal probe (15) is situated on the pump (1) and the first heating means is constituted by a heater band (16) surrounding said pump,

- the second thermal probe (17 is located in the air of the casing and the second heating means is constituted by a heater unit (18) located on the base of the casing and,

- the third thermal probe (19) is located integral with the cell (12) and the third heating means is constituted by a heater belt (20) surrounding the contour of the cell (12).

8. An apparatus according to any one of claims 4-6 characterised in that it comprises:

- a carriage (4) vertically movable between two positions: a low position and a high position, said carriage carries a pipette (2) and if necessary an agitator (21), said agitator being stationary in the high position and in operation in the low position,

- a conveyor (22), such as for example an endless band for carrying containers (6) containing the samples of liquid (5) to be analysed, the spacing between two successive containers is, in the case where the carriage is provided with an agitator, identical to the pipette-agitator spacing, such that in the low position, the pipette is located in one container and the agitator is located in the following container.

9. An apparatus according to claim 8 characterised in that the control by the C.C.U. of the movements of the conveyor (22), the carriage (4), the pump (1), the side valves (10) and (11) is organised according to a cycle extending between an instant $(t_1)$ and an instant $(t_8)$, the progress of said cycle being marked by instants $(t_1)$, $(t_2)$,...,$(t_8)$, the time $t_2-t_3$ being a flushing phase during which the circuit between the pipette and the slide valve (10) being cleaned and the time $t_3-t_7$ is a phase of filling the cell:

- at the instant $(t_o)$, the carriage (4) being in the high position, the conveyor advances to place a container containing a given liquid (L) forming part of a series of liquid to be assayed,..., L-1, L,L+1,..., facing said pipette, it stops at an instant $(t_1)$,

- the carriage descends at the instant $(t_1)$ to stop in the low position at the instant $(t_2)$,

- at the instant $(t_2)$ the pump (1) starts, the slide valve (10) being open and the slide valve (11) being closed, during the flushing phase $t_2-t_3$, the liquid cleans the circuit between the pipette and the slide valve (10),

- at the instant $(t_3)$ the slide valve (11) opens, the slide valve (10) being still open, during a period $t_3-t_4$, the liquid coming from the container goes through the two slide valves (10) and (11),

- at the instant $(t_4)$, the slide valve (10) closes, the slide valve (11) being still open, during a period $t_4-t_6$, the liquid is allowed to pass only through the slide valve (11),

- at the instant $(t_5)$, the pump stops,

- at the instant ($t_6$), the slide valve (10) opens and the slide valve (11) closes again,

- at the instant ($t_7$), the carriage rises to stop at the high position at an instant ($t_8$), at which the conveyor begins a new cycle,

- at the instant ($t_7$), and until the end of the flushing of the following liquid (L+1), the measurements being taken on the liquid (L), these measurements on the liquid (L) being followed by the calculations concerning the same liquid starting from the filling phase concerning the liquid (L+1), these calculations being able to extend as far as the end of the flushing phase concerning the liquid (L+2).

10. An apparatus according to all of claims 4 to 9 characterised in that it is constituted by two mechanically separate parts:

- a first part (26) constituted by the interferometer (23) and the measuring casing (24), this first part being provided with vibration-damping feet, and,

- a second part (28) spanning across said first part, this second part also being provided with vibration-damping feet (29), hydrous and electrical connections being made between these two parts with the aid of flexible links.

11. An apparatus according to claim 10 characterised in that the pump (1) is fixed on to the second part (28) with the aid of vibration-absorbing means.

EP 0 588 892 B1

Fig.1

18

EP 0 588 892 B1

Fig.2

Fig.3

Fig. 4

purge L+1

remplissage cellule L

purge L

A passeur
B descente chariot
C pompe
D vanne 10

E vanne 11
F descente chariot
G mesures
H calculs